Europäisches Patentamt

European Patent Office

Office européen des brevets

(11) Veröffentlichungsnummer: **0 194 631**

**A2**

## (12) EUROPÄISCHE PATENTANMELDUNG

(21) Anmeldenummer: **86103173.0**

(22) Anmeldetag: **10.03.86**

(51) Int. Cl.⁴: **B60S 3/06**

(30) Priorität: **13.03.85 DE 3508945**

(43) Veröffentlichungstag der Anmeldung:
**17.09.86 Patentblatt 86/38**

(84) Benannte Vertragsstaaten:
**FR GB SE**

(71) Anmelder: **Machin, Roy**
**Im Kälblesbiegel 16**
**D-7410 Reutlingen(DE)**

(72) Erfinder: **Machin, Roy**
**Im Kälblesbiegel 16**
**D-7410 Reutlingen(DE)**

(74) Vertreter: **Kucher, Hans, Dipl.-Ing.**
**Richard-Strauss-Weg 4**
**D-7410 Reutlingen(DE)**

(54) **Waschanlage für Kraftfahrzeuge.**

(57) Bei Waschanlagen für Kraftfahrzeuge mit um eine senkrechte Achse rotierender Waschbürste kommen häufig Beschädigungen der Waschbürste, ihres Antriebes oder von Karosserieteilen dadurch vor, daß sich Borsten der Waschbürste in einem Karosseriespalt festklemmen oder um ein hervorstehendes Karosserieteil herumwickeln. Solche Beschädigungen vermeidet die erfindungsgemäße Waschanlage durch einen Fühler, der jede beschädigungsträchtige Hemmung der Bürstenrotation oder der Fortbewegung der Bürste längs ihere Bahn relativ zum Kraftfahrzeug feststellt, und durch eine Steuervorrichtung, die beim Ansprechen des Fühlers die Drehrichtung der Bürste rasch ein-oder mehrmals umkehrt.

Fig. 1

EP 0 194 631 A2

Waschanlage für Kraftfahrzeuge

Die Erfindung betrifft eine Waschanlage für Kraftfahrzeuge gemäß dem Oberbegriff des Anspruchs 1.

Eine solche Waschanlage ist aus dem Prospekt "Euro.Kombi" der Firma Kleindienst, Augsburg, bekannt. Dort werden neben anderen Bürsten Seitenbürsten mit senkrechten Achsen um den Bug, die Fahrzeugseiten und das Heck des zu waschenden Kraftfahrzeuges herumgeführt. Um senkrechte Schmutzstreifen zu vermeiden, die am Bug und am Heck stehen bleiben könnten, werden dort die beiden Seitenbürsten, nachdem sie sich in der Fahrzeugmitte getroffen haben, zwecks Mittenüberdeckung zusammen um etwa 20 cm nach der einen Seite und anschließend um etwa dieselbe Strecke nach der anderen Seite über die Mitte hinaus hin-und herbewegt. Dabei kann es, wenn am Heck ein Fahrzeugteil, wie z.B. eine Anhängerkupplung, hervorsteht, die zusammen mit einem anderen Fahrzeugteil , z.B einer Stoßstange, einen nach außen sich erweiternden Spalt bildet, vorkommen, daß sich Borsten einer Seitenbürste im Spalt verkeilen, wobei die Bürste selbst durch Ausreißen von Borsten und/oder ihr Antriebsmotor durch einen erzwungenen Stillstand beschädigt wird.

Außerdem kann an jeder Stelle der Karosserie ein Teil, z.B. eine Antenne, ein Emblem oder ein Rückspiegel, hervorstehen, an dem sich Borsten der Bürste verfangen können, wodurch die Bürste und/oder das betreffende Karosserieteil Schaden nehmen kann.

Aus der DE-OS 25 22 872 ist eine Bürsteneinrichtung für Kraftfahrzeugwaschanlagen bekannt, die zwei koaxial senkrecht übereinander angeordnete Waschbürsten besitzt, von denen die untere Bürste konstant (dauern im selben Drehsinn und mit derselben Drehgeschwindigkeit) rotiert und von denen die obere Bürste auf Veranlassung einer Bedienungsperson mit Hilfe einer Kupplung und einer Bremse, die gegensinnig betätigt werden, entweder im Normalbetrieb zusammen mit der oberen Bürste angetrieben wird oder im Gefahrenfall vor einer Begegnung mit einem Hindernis angehalten wird. Die bekannte Anordnung hat die Nachteile, daß die untere Bürste beschädigt werden kann oder selbst Beschädigungen hervorrufen kann und daß im Bereich der oberen Bürste Teilflächen der Karosserie ungereinigt bleiben können. Außerdem ist der bauliche Aufwand für eine selbständig gelagerte zweite Bürste nebst Bremse und Kupplung beträchtlich, und es ist eine Bedienungsperson, die ständig Aufsicht führen muß, erforderlich.

Der Erfindung liegt die Aufgabe zugrunde, eine Beschädigung der Waschbürste und/oder ihrer Antriebsmotore und/oder hervorstehender Karosserieteile beim Festsetzen von Borsten in Spalten des Fahrzeuges oder an hervorstehenden Fahrzeugteilen zu vermeiden, ohne den Waschbetrieb aufzuhalten.

Diese Aufgabe wird durch die im Anspruch 1 gekennzeichneten Merkmale gelöst.

Auf diese Weise erfolgt sogleich beim Auftreten eines Kriteriums für die mögliche Beschädigung einer Seitenbürste oder ihres Antriebsmotors eine Drehrichtungsumkehr, durch die die festgeklemmten Borsten aus dem Spalt wieder freikommen und die Hemmung der Bürstenrotation aufgehoben wird, so daß keine Beschädigungen eintreten.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Hierbei zeigt

Fig. 1 eine Draufsicht auf ein erstes und ein zweites Ausführungsbeispiel und

Fig. 2 einen Ausschnitt aus einer Vorderansicht eines dritten und weiterer Ausführungsbeispiele.

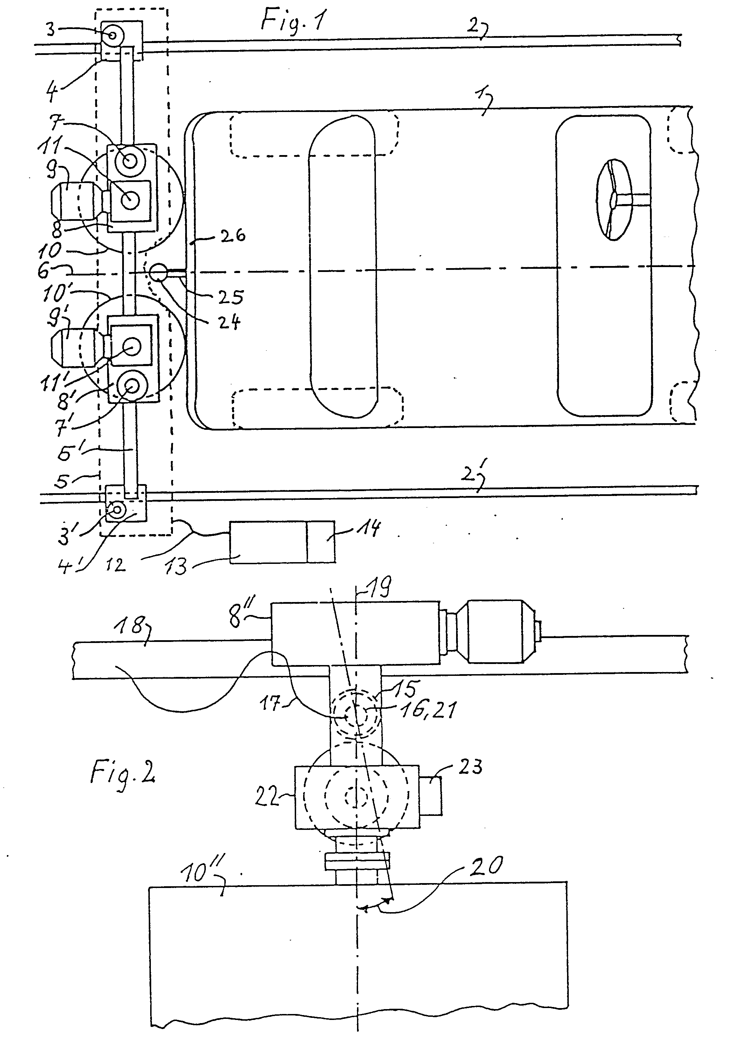

In Figur 1 sind eine waagerechte Dachbürst und gegebenenfalls vorhandene Radwaschbürsten nicht dargestellt. Ein zu waschendes Kraftfahrzeug 1 ist zwischen zwei Längslaufschienen 2, 2' eingestellt, auf denen ein auf zwei von Längsfahrmotoren 3, 3' antreibbaren Fahrwerken 4, 4' ruhender Portalrahmen 5 entlang einer Längsachse 6 vor- und zurückverfahrbar ist. Der Portalrahmen 5 trägt eine Querlaufschiene 5', auf der zwei von Querfahrmotoren 7, 7' antreibbare Laufkatzen 8, 8' quer verfahrbar sind, die je eine von einem Bürstenantriebsmotor 9, 9' in Rotation versetzbare Waschbürste 1o, 10' mit im wesentlichen senkrechter Achs 11, 11' tragen. Alle sechs Motoren 3, 3', 7, 7', 9, 9' des fahrbaren Portalrahmens 5 sind über ein bewegliches Kabel 12 mit einer vom Portalrahmen 5 abgesetzten Schalt-und Steuervorrichtung 13 verbunden, die den Lauf der Motoren bestimmt. Die Steuervorrichtung 13 enthält einen vom Strom der Bürstenantriebsmotoren 9, 9' durchflossenen Fühler 14, der den tatsächlich aufgenommenen Motorstrom mit einem über dem Normalwert des Motorstromes und auch über einem für die Bahnsteuerung der Waschbürsten 10, 10' relevanten ersten Schwellwert liegenden zweiten Schwellwert vergleicht und beim Überschreiten desselben die rasche Umkehr der Bürstenantriebsrichtung vernalaßt.

In Figur 1 sind die beiden Waschbürsten 10, 10' in einer Lage auf ihrer Bahn um das Fahrzeug dargestellt, in der sie sich aufeinander zu bewegen. Kurz darauf treffen sie in der Fahrzeugmitte bei der Längsachse 6 zusammen, worauf sie gemeinsam eine kleine Hin-und Herbewegung ausführen, um auch die Mitte des Fahrzeughecks zu erfassen. Wenn am Fahrzeugheck, wie dies in Figur 1 schematisch dargestellt ist, eine Kupplung 24 an einer Kupplungsstrebe 25 befestigt ist, die in geringem Abstand unter einer Stoßstange 26 hervorragt und mit dieser einen keilförmigen Spalt bildet, kann es beim Bürsten der Fahrzeugmitte vorkommen, daß sich Borsten einer Waschbürste in dem Spalt verklemmen und die Rotation der Bürste hemmen. In diesem Falle spricht sofort der Fühler 14 an und veranlaßt die rasche Umkehr der Drehrichtung der Bürsten, so daß kein Schaden entsteht.

Bei dem ebenfalls in Figur 1 dargestellten zweiten, dem ersten ähnlichen Ausführungsbeispiel spricht der Fühler 14 nicht auf einen Absolutwert des Motorstromes an, sondern auf die Ansteigsgeschwindigkeit des Motorstromes.

Bei dem in Figur 2 ausschnittsweise dargestellten dritten Ausführungsbeispiewird ein bei Hemmung der Bürstenrotation in der Aufhängung 15 der Waschbürste 10'' auftretendes Drehmoment von einem Fühler 16 beobachtet, der bei Überschreiten eines Drehmomentenschwellwertes über eine Signalleitung 17, die im beweglichen Kabel (12 in Figur 1) mitgeführt ist, ein Kommando zur Umsteuerung der Drehrichtung des Bürstenantriebes zur Steuervorrichtung (13 in Figur 1) überträgt.

Bei einem vierten, im wesentlichen dem in Figur 2 dargestellten dritten Ausführungsbeispiel gleichenden Ausführungsbeispiel ist die Aufhängung 15 der Waschbürste 10' elastisch ausgebildet, so daß bei Hemmung der Waschbürstenrotation und beim Weiterfahren der Laufkatze 8'' auf der Querlaufschiene 18 eine Schrägstellung der Achse 19 der Waschbürste 10'' um einen Winkel 20 auftritt. Ein an der Waschbürstenaufhängung 15 angebrachter Fühler 21 meldet an die Steuervorrichtung (13 in Figur 1), wenn der auftretende Winkel einen Schwellwert überschreitet und veranlaßt so die Drehrichtungsumkehr.

Ein fünftes und ein sechstes Ausführungsbeispiel ergeben sich , wenn am Bürstenantriebsgetriebe (22 in Figur 2) ein Fühler (23 in Figur 2) angebaut ist, der das Überschreiten eines Grenzwertes der Drehzahlabnahme bzw. der Drehverzögerung an die Steuervorrichtung (13 in Figur 1) meldet.

Alle vorstehend beschriebenen Ausführungsbeispiele arbeiten in der Weise, daß bei jedem Ansprechen des betreffenden Fühlers die Drehrichtung der Waschbürste einmal, also auf Dauer, umgekehrt wird.

Weitere Ausführungsbeispiele ergeben sich aus den vorstehend beschriebenen, wenn in der Steuervorrichtung ein nicht näher dargestellter, monostabil arbeitender, vom Signal des betreffenden Fühlers angestoßener Umschalter vorgesehen ist, der die Drehrichtung des Waschbürstenantriebes nur vorübergehend während einer kurzen, nur wenigen Bürstenumdrehungen entsprechenden Zeitspanne umkehrt.

## Ansprüche

1. Waschanlage für Kraftfahrzeuge mit mindestens einer Waschbürste mit senkrecht orientierter Achse, mit einem Antrieb zur Rotation der Waschbürste um ihre Achse, mit einer Vorrichtung zum Herumführen der Waschbürste auf einer Bahn um das zu waschende Fahrzeug in einer Relativbewegung zwischen Fahrzeug und Waschbürste und mit einer Steuervorrichtung zum Festlegen der Bahn in mittel- oder unmittelbarer Abhängigkeit von den Abmessungen des jeweils zu waschenden Fahrzeuges und zum Steuern des gesamten Ablaufes der Waschanlage, dadurch gekennzeichnet, daß die Waschanlage einen Fühler aufweist, der auf eine beschädigungsträchtige Hemmung der Rotation und/oder des Laufs der Waschbürste auf ihrer Bahn anspricht und dabei über die Steuervorrichtung die Rotationsrichtung der Waschbürste umkehrt.

2. Waschanlage nach Anspruch 1, dadurch gekennzeichnet, daß bei jedem Ansprechen des Fühlers die Drehrichtung des Waschbürstenantriebes umgekehrt wird.

3. Waschanlage nach Anspruch 1, dadurch gekennzeichnet, daß bei jedem Ansprechen des Fühlers die Drehrichtung des Waschbürstenantriebes nur vorübergehend während einer kurzen Zeitspanne umgekehrt wird.

4. Waschanlage nach Anspruch 2 oder 3, dadurch gekennzeichnet, daß der Fühler (14) auf das Überschreiten eines Grenzwertes der Drehzahlabnahme der rotierenden Waschbürste (10 bzw. 10') anspricht.

5. Waschanlage nach Anspruch 2 oder 3, dadurch gekennzeichnet, daß daß der Fühler (23) auf das Überschreiten eines Grenzwertes der Verzögerung der Rotationsbewegung der Waschbürste (10' ') anspricht.

6. Waschanlage nach Anspruch 2 oder 3, dadurch gekennzeichnet, daß der Fühler (21) auf das Überschreiten eines Grenzwertes der Schrägstellung der Waschbürstenachse - (19) gegenüber der Senkrechten anspricht.

7. Waschanlage nach Anspruch 2 oder 3, dadurch gekennzeichnet, daß der Fühler (16) auf das Überschreiten eines Grenzwertes der Drehmomente in der Aufhängung (15) der Waschbürste (10' ') beim Schrägstellen der Waschbürstenachse (19) anspricht.

8. Waschanlage nach Anspruch 2 oder 3, dadurch gekennzeichnet, daß der Fühler (14) auf das Überschreiten eines Grenzwertes des vom Antriebsmotor (9 bzw. 9') aufgenommenen Stromes oder der Leistung anspricht.

9. Waschanlage nach Anspruch 2 oder 3, dadurch gekennzeichnet, daß der Fühler (14) auf das Überschreiten eines Grenzwertes der Stromanstiegsgeschwindigkeit im Antriebsmotor (9 bzw. 9') der Waschbürste (10 bzw. 10') anspricht.

*Fig. 1*

*Fig. 2*